# FASCICULE DE BREVET EUROPEEN

(11) **EP 0 835 003 B1**
(45) Date de publication et mention de la délivrance du brevet: **29.11.2000**
(21) Numéro de dépôt: 97402263.4
(22) Date de dépôt: 29.09.1997
(51) Int. Cl.: H04B 10/24, H04J 14/02

(54) **Dispositif d'insertion/extraction de canaux sur une liaison optique multicanaux bidirectionnelle**
Kanal Einfügungs/Ausblendungsvorrichtung über eine optische bidirektionale Mehrkanalverbindung
Channel add-drop device over a multichannel bidirectional optical link

(30) Priorité: 03.10.1996 FR 9612057
(43) Date de publication de la demande: 08.04.1998
(73) Titulaire: ALCATEL, 75008 Paris (FR)
(72) Inventeur: Gautheron, Olivier, 78180 Montigny Le Bretonneux (FR); Letellier, Vincent, 75013 Paris (FR)
(74) Mandataire: Lamoureux, Bernard

(56) Documents cités:
- FR-A- 2 687 030
- CHAWKI ET AL: "Evaluation of an Optical Boosted Add/Drop Multiplexer OBADM including circulators and fiber grating filters" 21ST EUROPEAN CONFERENCE ON OPTICAL COMMUNICATION ECOC 95, vol. 1, 17 - 21 septembre 1995, pages 47-50, XP002032556
- JONES K P ET AL: "OPTICAL WAVELENGTH ADD-DROP MULTIPLEXER IN INSTALLED SUBMARINE WDM NETWORK" ELECTRONICS LETTERS, vol. 31, no. 24, 23 novembre 1995, page 2117/2118 XP000548194

## Description

La présente invention concerne un dispositif d'insertion/extraction de canaux sur une liaison optique multicanaux bidirectionnelle, et en particulier sur une liaison optique de type WDM (Wavelength Division Multiplexing).

Une liaison optique multicanaux est une liaison optique destinée à transmettre des signaux optiques sur une pluralité de canaux, chaque canal ayant une longueur d'onde de transmission distincte de celles des autres canaux, au moyen d'une fibre optique dite fibre optique de ligne. Lorsque cette liaison optique est bidirectionnelle, elle transmet plusieurs canaux dans les deux sens de transmission, appelés communément sens aller et sens retour.

Les liaisons optiques multicanaux envisagées à l'heure actuelle sont constituées de lignes optiquement continues sur de très grandes distances (plusieurs dizaines de milliers de kilomètres). Dans ce type de liaisons, un signal optique utile donné n'est jamais transmis d'une extrémité à l'autre de la liaison ; en général, on insère et/ou l'on extrait des canaux optiques régulièrement le long de la liaison, ce qui a notamment pour but de desservir des zones géographiques particulières. Les insertions/extractions sont effectuées à l'aide de dispositifs d'insertion/extraction comportant des circulateurs optiques et des réseaux diffractants tels que des réseaux de Bragg.

Un dispositif d'extraction de canal classique utilisé pour extraire un canal d'une liaison optique unidirectionnelle comprend un circulateur optique à trois ports inséré directement sur la fibre optique de ligne de sorte que deux de ses ports sont reliés à cette dernière. Son troisième port est relié à une portion de fibre optique dite annexe. Enfin, un réseau diffractant est inséré sur la fibre optique de ligne par exemple en aval du circulateur si ce dernier fonctionne dans le sens contraire au sens trigonométrique.

Le dispositif précédent fonctionne de la manière suivante pour une liaison optique capable de transmettre n canaux (n étant un entier supérieur ou égal à 2) et de laquelle on souhaite extraire un canal de longueur d'onde λi (i = 1 à n) afin de desservir une zone géographique donnée (en supposant que tous les canaux sont présents sur la liaison lors de l'arrivée sur le dispositif d'extraction).

Les signaux de longueurs d'onde λj (j = 1 à n) arrivent au niveau du circulateur par le premier port de ce dernier, puis sont dirigés vers son deuxième port qui les dirige vers le réseau diffractant. Le réseau diffractant a une longueur d'onde de réflexion égale à λi. Les signaux de longueur d'onde λi sont donc réfléchis par le réseau diffractant en direction du deuxième port du circulateur qui les dirige ensuite vers la fibre optique annexe, dont l'autre extrémité est par exemple reliée à un récepteur de signaux optiques. Les signaux de longueur d'onde λi (et par conséquent le canal λi) sont ainsi extraits de la liaison.

Un tel dispositif pourrait être utilisé pour insérer sur la liaison, dans le sens retour, un canal de longueur d'onde λk par l'intermédiaire de la fibre annexe, grâce au circulateur qui le dirigerait directement dans le sens retour. Ainsi, un tel dispositif pourrait servir à effectuer l'extraction d'un canal dans le sens aller et l'insertion d'un canal dans le sens retour.

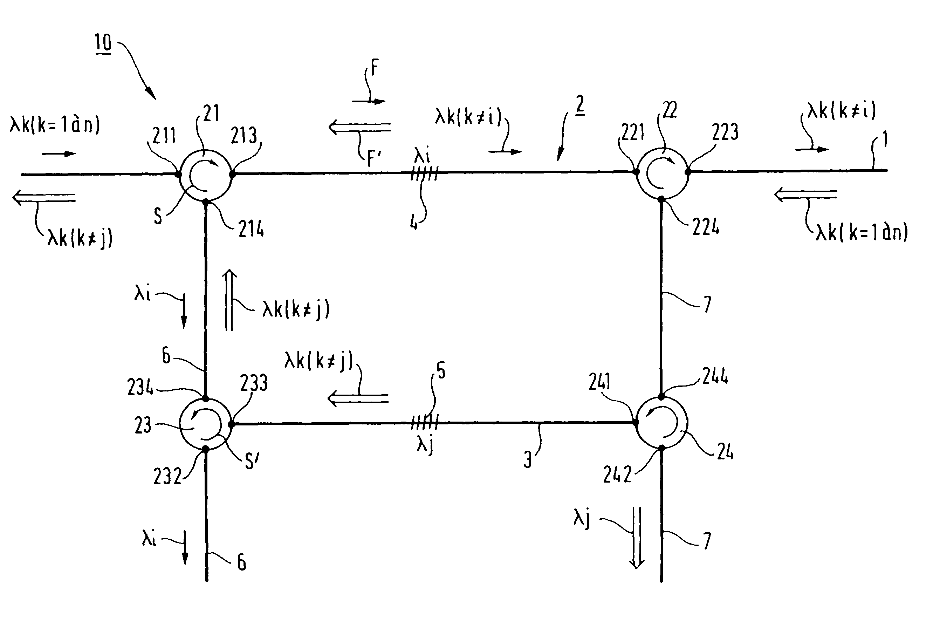

On pourrait alors penser que l'utilisation d'un tel dispositif associé à un dispositif symétrique (un circulateur fonctionnant dans le sens trigonométrique associé à un réseau diffractant inséré sur la fibre de ligne en amont de ce circulateur), tel que représenté sur la figure 1a de l'article 21st European conference on optical communication, ECOC 95, vol. 1, 17-21 sept. 1995, pages 47-50, CHAWKI et al. : "Evaluation of an optical boosted add/drop multiplexer OBADM including circulators and fibre grating filtres" pourrait permettre d'effectuer l'insertion/extraction de canaux dans les deux sens de la liaison bidirectionnelle.

Cependant, ce n'est pas le cas. En effet, si l'on associe deux dispositifs symétriques de ce type, on ne peut pas faire circuler sur la liaison, dans le sens retour, un canal dont la longueur d'onde est identique à celle d'un canal que l'on a extrait dans le sens aller, du fait du réseau diffractant inséré sur la fibre de ligne pour effectuer l'extraction dans le sens aller. De même, on ne peut faire circuler sur la liaison, dans le sens aller, un canal dont la longueur d'onde est identique à celle d'un canal que l'on a extrait dans le sens retour, du fait du réseau diffractant inséré sur la fibre de ligne pour effectuer l'extraction dans le sens retour.

On comprend donc bien qu'une telle solution, si elle apparaît simple au premier abord, est tout à fait pénalisante sur le plan de la flexibilité.

Le but de la présente invention est donc de mettre au point un dispositif d'insertion/extraction de canaux sur une liaison optique multicanaux bidirectionnelle qui ne présente pas les désavantages énoncés ci-dessus.

La présente invention propose à cet effet un dispositif d'insertion/extraction de canaux pour une liaison optique multicanaux bidirectionnelle comprenant :
- deux circulateurs optiques principaux ayant au moins trois ports chacun, un premier port de chacun desdits circulateurs optiques principaux formant un premier et un deuxième port de connexion pour une liaison optique multicanaux bidirectionnelle,
- un segment de fibre optique reliant un deuxième port de chacun des circulateurs optiques principaux,
- une première fibre optique annexe reliée à un troisième port de l'un des circulateurs optiques principaux, et une deuxième fibre optique annexe reliée à un troisième port de l'autre des circulateurs optiques principaux,

lesdits ports desdits circulateurs optiques principaux étant disposés de manière à établir un chemin optique monodirectionnel du premier port de connexion vers le deuxième port de connexion en passant par ledit segment de fibre optique,
ledit dispositif d'insertion/extraction étant caractérisé en ce qu'il comprend en outre
   - deux circulateurs optiques annexes à au moins trois ports et un segment de fibre optique de dérivation, chaque circulateur optique annexe étant relié par un premier port à l'une des fibres optiques annexes et par un deuxième port audit segment de fibre optique de dérivation de manière à établir un chemin optique monodirectionnel du deuxième port de connexion vers le premier port de connexion en passant par ledit segment de fibre optique annexe,
   - au moins un réseau diffractant inséré sur ledit segment de fibre optique de ligne et ayant une longueur d'onde de réflexion λi correspondant à la longueur d'onde d'un canal à extraire et reçu sur le premier port de connexion, et
   - au moins un réseau diffractant inséré sur ledit segment de fibre optique de dérivation et ayant une longueur d'onde de réflexion λj correspondant à la longueur d'onde d'un canal à extraire et reçu sur le deuxième port de connexion.

Selon l'invention, on crée une dérivation de la liaison optique au niveau du dispositif d'insertion/extraction. Grâce à cette dérivation, on peut associer des unités d'insertion et d'extraction fonctionnant dans un sens de transmission sans pénaliser la transmission dans le sens opposé, puisque le ou les réseaux diffractants servant à l'extraction de canaux dans le sens aller sont insérés sur la fibre de ligne alors que le ou les réseaux diffractants servant à l'extraction de canaux dans le sens retour sont insérés sur la fibre de dérivation.

D'autres caractéristiques et avantages de la présente invention apparaîtront dans la description qui va suivre d'un mode de réalisation de la présente invention, donné à titre illustratif et nullement limitatif.

La figure unique représente un schéma simplifié d'un dispositif d'insertion/extraction selon l'invention.

Dans tout ce qui suit, on adopte pour désigner les ports des circulateurs la convention suivante : les ports d'un circulateur sont numérotés par des numéros de référence se terminant par 1, 2, 3 et 4 en suivant le sens de fonctionnement de ce circulateur, le numéro de référence se terminant par 1 étant celui situé dans la position "Ouest" du circulateur.

On voit sur cette figure une liaison optique 10 à n canaux (n étant un entier supérieur ou égal à 2) bidirectionnelle qui comprend une fibre optique de ligne 1 dont chacune des extrémités est reliée à un émetteur/récepteur de signaux optiques (non représenti). La liaison 10 comprend également un dispositif d'insertion/extraction selon l'invention, référencé 2, inséré sur la fibre de ligne 1.

Les canaux transmis dans le sens aller (flèche F) sont symbolisés par une flèche simple, et les canaux transmis dans le sens retour (flèche F') sont symbolisés par une double flèche.

Le dispositif d'insertion/extraction 2 selon l'invention comprend :
- deux circulateurs dits principaux 21 et 22, à trois ports chacun, fonctionnant, selon le mode de réalisation illustré, tous les deux dans le même sens S, par exemple le sens contraire au sens trigonométrique, et insérés sur la fibre de ligne 1 de sorte que deux de leurs ports, respectivement 211 et 213 pour le circulateur 21 et 221 et 223 pour le circulateur 22 sont reliés à cette dernière ; les circulateurs 21 et 22 se succèdent dans le sens aller,
- une fibre optique 3 dite de dérivation,
- deux circulateurs dits annexes 23 et 24, à au moins trois ports chacun, fonctionnant, selon le mode de réalisation illustré, tous les deux dans le même sens S' opposé au sens S, c'est-à-dire dans l'exemple considéré dans le sens trigonométrique, et reliés entre eux par la fibre de dérivation 3 qui assure la jonction entre leurs ports 233 et 241 respectivement,
- un réseau diffractant 4 inséré sur la fibre de ligne 1 entre les circulateurs principaux 21 et 22 et ayant pour longueur d'onde de réflexion λi (i est un entier compris entre 1 et n),
- un réseau diffractant 5 inséré sur la fibre de dérivation 3 entre les circulateurs annexes 23 et 24 et ayant pour longueur d'onde de réflexion λj (j est un entier compris entre 1 et n et qui peut ou non être égal à i),
- deux fibres optiques 6 et 7 dites annexes reliant respectivement le port 214 du circulateur principal 21 (qui suit immédiatement le port 213 dans le sens S) au port 234 du circulateur annexe 23 (qui suit immédiatement le port 233 dans le sens S'), et le port 224 du circulateur principal 22 (qui suit immédiatement le port 223 dans le sens S) et le port 244 du circulateur annexe 24 (qui précède immédiatement le port 241 dans le sens S').

Le fonctionnement du dispositif 2 est le suivant. On suppose que tous les canaux que peut transmettre la liaison 10 dans le sens aller arrivent sur le port 211 du circulateur principal 21, et que tous les canaux que peut transmettre la liaison 10 dans le sens retour arrivent sur le port 223 du circulateur principal 22.

Ainsi, dans le sens aller, les signaux de longueurs d'onde λk (k = 1 à n) sont dirigés par le circulateur 21 sur le réseau diffractant 4. De ce fait, les signaux de longueur d'onde λi sont réfléchis par le réseau diffractant 4 et reviennent vers le circulateur 21 (port 213) qui les dirige par l'intermédiaire de son port 214 et de la fibre annexe 6 vers le circulateur annexe 23, qui à son tour les envoie par son port 232 par exemple vers un récepteur (non représenté) pour desservir une zone géographique donnée. Les autres signaux de longueurs d'onde λk (k≠i) traversent le réseau diffractant 4 puis arrivent sur le port 221 du circulateur 22 qui les dirige ensuite vers le port 223 et ainsi vers la fibre de ligne 1 sur laquelle leur transmission se poursuit. On a ainsi extrait de la liaison optique 10 dans le sens aller le canal de longueur d'onde λi.

De la même manière, dans le sens retour, les signaux de longueurs d'onde λk (k = 1 à n) sont dirigés par le circulateur 22 sur le circulateur 24 qui lui-même les dirige sur le réseau diffractant 5. De ce fait, les signaux de longueur d'onde λj sont réfléchis par le réseau diffractant 5 et reviennent vers le circulateur 24 (port 241) qui les dirige par l'intermédiaire de son port 242 et de la fibre annexe 7 par exemple vers un récepteur (non représenté) pour desservir une zone géographique donnée. Les autres signaux de longueurs d'onde λk (k≠j) traversent le réseau diffractant 5 puis arrivent sur le port 233 du circulateur 23 qui les dirige ensuite par l'intermédiaire de son port 234 et de la fibre annexe 6 vers le circulateur 21 qui lui-même les dirige vers la fibre de ligne 1 sur laquelle leur transmission se poursuit. On a ainsi extrait de la liaison optique 10 dans le sens retour le canal de longueur d'onde λj.

De manière identique, on peut insérer dans le sens aller, par l'intermédiaire de la fibre annexe 7, le canal de longueur d'onde λi, et dans le sens retour, par l'intermédiaire de la fibre annexe 6, le canal de longueur d'onde λj.

En disposant entre les circulateurs 21 et 22 un réseau diffractant supplémentaire de longueur d'onde de réflexion λl (l≠i), on peut insérer dans le sens aller, par l'intermédiaire de la fibre optique annexe 7, le canal de longueur d'onde λl. De même, en disposant entre les circulateurs 23 et 24 un réseau diffractant supplémentaire de longueur d'onde de réflexion λm (m≠on peut insérer dans le sens retour, par l'intermédiaire de la fibre optique annexe 6, le canal de longueur d'onde λm.

En faisant varier le nombre de réseaux diffractants utilisés et leurs longueurs d'onde de réflexion, on peut insérer ou extraire autant de canaux que souhaité, dans n'importe quel sens de transmission. Bien entendu, on ne peut insérer sur la ligne dans un sens donné qu'un canal qui en a été extrait au préalable dans ce sens (au sein du même dispositif d'insertion/extraction, ou bien au sein d'un dispositif d'insertion/extraction précédent), et de même, il n'est utile d'extraire de la ligne qu'un canal qui y existe déjà.

On comprend bien que, grâce au dispositif selon l'invention, on peut insérer ou extraire dans un sens des canaux que l'on a respectivement extraits ou insérés dans l'autre, ce qui rend ce dispositif très flexible.

Bien entendu, la présente invention n'est pas limitée au mode de réalisation qui vient d'être décrit.

Notamment, on pourra remplacer les circulateurs et les réseaux diffractants par tout autre moyen équivalent permettant de réaliser les mêmes fonctions.

Par ailleurs, il n'est pas nécessaire que les circulateurs principaux aient tous les deux le même sens de fonctionnement (sens de rotation des signaux), ni que les circulateurs annexes aient tous deux le même sens de fonctionnement. Il suffit que les circulateurs principaux aient chacun un sens de fonctionnement tel que, dans l'un des sens de transmission, les signaux se propageant sur la fibre optique de ligne restent sur cette dernière. Il suffit en outre que chacun des circulateurs annexes ait un sens de fonctionnement opposé à celui du circulateur principal auquel il est relié par la fibre optique annexe associée.

## Revendications

1. Dispositif d'insertion/extraction de canaux pour une liaison optique multicanaux bidirectionnelle (10) comprenant :
- deux circulateurs optiques principaux ayant au moins trois ports chacun (21, 22), un premier port (211, 223) de chacun desdits circulateurs optiques principaux formant un premier et un deuxième port de connexion pour une liaison optique multicanaux bidirectionnelle,
- un segment de fibre optique multicanaux reliant un deuxième port (213, 221) de chacun des circulateurs optiques principaux,
- une première (6) fibre optique annexe reliée à un troisième port (214, 224) de l'un des circulateurs optiques principaux, et une deuxième (7) fibre optique annexe reliée à un troisième port (214, 224) de l'autre des circulateurs optiques principaux,
lesdits ports desdits circulateurs optiques principaux étant disposés de manière à établir un chemin optique monodirectionnel du premier port de connexion vers le deuxième port de connexion en passant par ledit segment de fibre optique,
ledit dispositif d'insertion/extraction étant caractérisé en ce qu'il comprend en outre
- deux circulateurs optiques annexes (23, 24) à au moins trois ports et un segment de fibre optique de dérivation (3), chaque circulateur optique annexe étant relié par un premier port (234, 244) à l'une des fibres optiques annexes (6, 7) et par un deuxième port audit segment de fibre optique de dérivation de manière à établir un chemin optique monodirectionnel du deuxième port de connexion vers le premier port de connexion en passant par ledit segment de fibre optique annexe (3),
- au moins un réseau diffractant (4) inséré sur ledit segment de fibre optique de ligne et ayant une longueur d'onde de réflexion (λi) correspondant à la longueur d'onde d'un canal à extraire et reçu sur le premier port de connexion, et
- au moins un réseau diffractant (5) inséré sur ledit segment de fibre optique de dérivation (3) et ayant une longueur d'onde de réflexion (λj) correspondant à la longueur d'onde d'un canal à extraire et reçu sur le deuxième port de connexion.

2. Dispositif selon la revendication 1 caractérisé en ce que ledit segment de fibre optique comprend, pour chaque canal à insérer et à émettre vers le deuxième prot de connexion et/ou à extraire et reçu sur le premier port de connexion, un réseau diffractant réfléchissant à la longueur d'onde dudit canal.

3. Dispositif selon la revendication 1 caractérisé en ce que ledit segment de fibre optique annexe (3) comprend, pour chaque canal à insérer et à émettre vers le premier port de connexion (211) et/ou à extraire et reçu sur le deuxième port de connexion (223), un réseau diffractant réfléchissant à la longueur d'onde dudit canal.

## Claims

1. Drop/insert apparatus for dropping/inserting channels for a both-way multi-channel optical link (10) comprising:
two main optical circulators (21, 22) each having at least three ports, a first port (211, 223) of each of said main optical circulators forming a first and a second connection port for a both-way multi-channel optical link;
a multi-channel optical fiber segment connecting a second port (213, 221) of each of the main optical circulators; and
a first (6) auxiliary optical fiber connected to a third port (214, 224) of one of the main optical circulators, and a second (7) auxiliary optical fiber connected to a third port (214, 224) of the other main optical circulator,
said ports of said main optical circulators being disposed so as to establish a one-way optical path from the first connection port to the second connection port, passing via said optical fiber segment,
said drop/insert apparatus being characterized in that it further comprises:
two auxiliary optical circulators (23, 24) having at least three ports and a "by-pass" optical fiber segment, each auxiliary optical circulator being connected via a first port (234, 244) to one of the auxiliary optical fibers (6, 7) and via a second port to said by-pass optical fiber segment so as to establish a one-way optical path from the second connection port to the first connection port, passing via said auxiliary optical fiber segment (3);
at least one diffraction grating (4) inserted in said "line" optical fiber segment and having a reflection wavelength (λi) corresponding to the wavelength of a channel to be dropped and received on the first connection port; and
at least one diffraction grating (5) inserted in said by-pass optical fiber segment (3) and having a reflection wavelength (λj) corresponding to the wavelength of a channel to be dropped and received on the second connection port.

2. Apparatus according to claim 1, characterized in that said optical fiber segment comprises, for each channel to be inserted and transmitted towards the second connection port and/or to be dropped and received on the first connection port, a diffraction grating reflecting at the wavelength of said channel.

3. Apparatus according to claim 1, characterized in that said auxiliary optical fiber segment (3) comprises, for each channel to be inserted and transmitted towards the first connection port (211) and/or to be dropped and received on the second connection port (223), a diffraction grating reflecting at the wavelength of said channel.

## Patentansprüche

1. Vorrichtung zum Einführen/Extrahieren von Kanälen für eine optische, bidirektionelle Multikanalverbindung (10), umfassend:
- zwei optische Hauptzirkulatoren, die jeweils zumindest drei Zugänge (21, 22) haben, wobei ein erster Zugang (211, 223) eines jeden dieser optischen Hauptzirkulatoren einen ersten und einen zweiten Verbindungszugang für eine bidirektionelle, optische Multikanalverbindung bildet,
- ein Segment der optischen Multikanalfaser, das einen zweiten Zugang (213, 221) eines jeden der optischen Hauptzirkulatoren verbindet,
- einen ersten (6) optischen Faserzusatz, der mit einem dritten Zugang (214, 224) eines der optischen Hauptzirkulatoren verbunden ist, und eine zweite (7) optische Zusatzfaser, die mit einem dritten Zugang (214, 224) eines anderen der optischen Hauptzirkulatoren verbunden ist, wobei die Zugänge der optischen Hauptzirkulatoren in einer Weise angeordnet sind, dass sie einen monodirektionellen, optischen Pfad des ersten Verbindungszugangs zum zweiten Verbindungszugang herstellen, bei Durchlaufen des optischen Fasersegmentes, wobei die Vorrichtung zum Einführen/Extahieren dadurch gekennzeichnet ist,
dass sie darüber hinaus umfasst:
- zwei zusätzliche optische Zirkulatoren (23, 24) mit zumindest drei Zugängen und einem optischen Umleitungssegment (3), wobei jeder zusätzliche optische Zirkulator über einen ersten Zugang (234, 244) mit einer der optischen Zusatzfasern (6, 7) verbunden ist und über einen zweiten Zugang mit dem optischen Umleitungssegment zur Herstellung eines monodirektionellen optischen Pfads des zweiten Verbindungszugangs mit dem ersten Verbindungszugang, bei Durchlaufen des zusätzlichen optischen Fasersegments (3),
- zumindest ein Brechungsnetz (4), welches in das optische Fasersegment der Leitung eingeführt ist und eine Reflektionswellenlänge (ëi) hat, die die Wellenlänge eines zu extrahierenden Kanals hat, der von dem ersten Verbindungszugang aufgenommen wird, und
- zumindest ein Brechungsnetz (5), welches in das optische Umleitungsfasersegment (3) eingefügt ist und eine Reflektionswellenlänge (ëj) hat, die der Wellenlänge eines zu extrahierenden Kanals entspricht, der von dem zweiten Verbindungszugang aufgenommen wird.

2. Vorrichtung nach Anspruch 1, dadurch gekennzeichnet, dass das optische Fasersegment für jeden einzufügenden und zu dem zweiten Verbindungszugang zu emittierenden und/oder zu extrahierenden und von dem ersten Verbindungszugang aufgenommenen Kanal ein reflektierendes Brechungsnetz mit der Wellenlänge des Kanals aufweist.

3. Vorrichtung nach Anspruch 1, dadurch gekennzeichnet, dass das zusätzliche optische Fasersegment (3) für jeden einzufügenden und zu dem ersten Verbindungszugang (211) zu emittierenden und/oder zu extrahierenden und von dem zweiten Verbindungszugang (223) aufgenommenen Kanal ein reflektierendes Brechungsnetz mit der Wellenlänge des Kanals aufweist.
